# EUROPEAN PATENT APPLICATION

(11) **EP 2 161 547 A1**
(43) Date of publication of application: **10.03.2010**
(21) Application number: 08425593.4
(22) Date of filing: 05.09.2008
(51) Int. Cl.: G01D 5/14, G01D 5/245

(54) **Control unit and method for determining the angular position of a drive shaft of an internal combustion engine**

(71) Applicant: Magneti Marelli Powertrain S.p.A., 28011 Corbetta (IT)
(72) Inventor: Piciotti, Roberto, 40139 Bologna (IT); Baldassari, Andrea, 40132 Bologna (IT); Angellotti, Serino, 40134 Bologna (IT); Nesci, Walter, 40037 Sasso Marconi (IT); Armeni, Saverio, 50142 Firenze (IT)
(74) Representative: Bergadano, Mirko

(57) **Abstract**

A unit and method of controlling an internal combustion engine (1), which is provided with a pivotally mounted drive shaft (4); the control unit has a position sensor (6) coupled to the drive shaft (4) for detecting the angular revolution speed of the drive shaft (4) itself; and a control unit (12), which is connected to the position sensor (6) and processes an output signal from the position sensor (6) itself for determining the angular position and the angular speed of the drive shaft (4); the position sensor (6) is in turn provided with a magnetic element (7), which is integral with a free end of the drive shaft (4), and with a reader (9) arranged in a fixed position facing the magnetic element (7) for reading the orientation of the magnetic element (7).

## Description

### TECHNICAL FIELD

The present invention relates to a control unit and method for determining the angular position of a drive shaft of an internal combustion engine in an internal combustion engine.

### BACKGROUND ART

An internal combustion engine includes a number of cylinders and a corresponding number of pistons, each of which is slidingly accommodated inside a corresponding cylinder and transmits the motion to a drive shaft pivotally mounted by means of a rod-crank coupling. In a modern internal combustion engine, for controlling the fuel combustion inside the cylinders (i.e. for controlling the injection of fuel and for controlling, in controlled ignition engines, the ignition of the mixture), the instantaneous angular position of the drive shaft must be known in real time with the adequate accuracy (from which it is possible to further obtain the angular speed and the angular acceleration of the drive shaft by means of a simple time derivative operation).

Position sensors of the "phonic wheel" type are used to determine the instantaneous angular position of the drive shaft in the currently marketed internal combustion engines; a position sensor of the "phonic wheel" type includes a toothed wheel (namely called "phonic wheel") which is provided with a plurality of teeth and is integral with the drive shaft, and a reader (e.g. of the inductive or Hall effect type) which is arranged in a fixed position close to the phonic wheel and is adapted to read the passage of each tooth of the phonic wheel. By counting the number of teeth of the phonic wheel by means of the reader, the relative angular position of the drive shaft may be determined; for determining the absolute angular position of the drive shaft, the phonic wheel is provided with a predetermined angular position of a singularity (typically two teeth missing from a 60 tooth wheel) which is known beforehand and recognized by the reader.

A magnetic field generator (e.g. a permanent magnet) is arranged close to the reader and generates a magnetic field which hits the reader; the alternation of teeth and the voids of the phonic wheel determines cyclic variations in the intensity of the magnetic field which hits the reader modifying the gap existing between the magnetic field and the reader. Accordingly, the reader detects, in use, the variation of magnetic field generated by the alternating teeth and voids of the phonic wheel; then the reader outputs a square wave which represents the alternating of teeth and voids of the phonic wheel and has a void of larger dimensions (twice or three times normal) at the singularity of the phonic wheel. An electronic control unit of the internal combustion engine receives the square wave signal supplied by the position sensor reader and, by processing such a square wave signal, determines the absolute angular position, the average angular speed, the instantaneous angular speed, the instantaneous angular acceleration, and the direction of revolution of the drive shaft; specifically, the frequency and the width of the square wave signal supplied by the reader are proportional to the instantaneous angular speed of the drive shaft.

In order to allow the reader to surely and accurately identify the alternating of teeth and voids of the phonic wheel, the teeth and voids of the phonic wheel itself must have a linear development which is not excessively small; accordingly, the higher the number of teeth which must be present in the phonic wheel (i.e. the higher the required angular resolution of the phonic wheel), the larger the diameter of the phonic wheel itself needs to be. Therefore, the size (and thus the resolution) of a phonic wheel must necessarily be an accommodation between the needs of accuracy and the needs to contain the mechanical inertia of the phonic wheel itself. In the currently marketed internal combustion engines, phonic wheels with a range of 6° between the beginning of one tooth and the beginning of the next tooth are used, so that sixty teeth are arranged on the periphery of the phonic wheel, except for the singularity, which represents the reference point made by removing two of the sixty teeth with which the phonic wheel is provided. In order to obtain resolutions higher than 6° it would be necessary to use larger phonic wheels, with a consequent great increase of the mechanical inertia of the phonic wheels themselves. It is worth noting that a phonic wheel provided with 60 teeth already has a non negligible size and may already have locating difficulties in the case of engines of small or very small capacity intended for very compact vehicles.

Furthermore, upon starting the combustion engine, it is not possible to know the absolute angular position of the drive shaft until the first passage of the singularity of the phonic wheel in front of the reader; therefore, the engine control is not able to correctly control the fuel injection and, if required, the mixture ignition, at the first revolution of the drive shaft immediately after the start-up.

Finally, since the singularity is represented by the two missing teeth, a 18° width range in which the sensor is blind, i.e. is not able to detect magnetic field variations and provide indications about the drive shaft speed, corresponds to each revolution of the phonic wheel; in other words, at the singularity, the resolution of the reader is of 18° and not 6° with the consequent considerable worsening of the position sensor accuracy. The need for obtaining information with a higher resolution, i.e. with a finer fractioning, is increasingly more felt, because the phonic wheel is able to provide information only every 6° and within this range the information may only be interpolated.

### DISCLOSURE OF INVENTION

It is the object of the present invention to provide a control unit and method for determining the angular position of a drive shaft of an internal combustion engine which are free from the above-described drawbacks and which are specifically easy and cost-effective to be implemented.

According to the present invention, a control unit and method for determining the angular position of a drive shaft of an internal combustion engine are provided as disclosed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of an internal combustion engine provided with a control unit constructed according to the present invention;
- figure 2 diagrammatically illustrates, on enlarged scale and with parts removed for clarity, a first embodiment of the position sensor of the control unit in figure 1;
- figure 3 is a graph which shows the time evolution of three digital electric signals generated by the position sensor in figure 2 and of two digital electric signals output by the position sensor in figure 2;
- figure 4 is a graph which shows the time evolution of a digital electric signal output by the position sensor in figure 2 according to a different embodiment;
- figure 5 diagrammatically illustrates, on enlarged scale and with parts removed for clarity, a second embodiment of the position sensor of the control unit in figure 2.

### PREFERRED EMBODIMENTS OF THE INVENTION

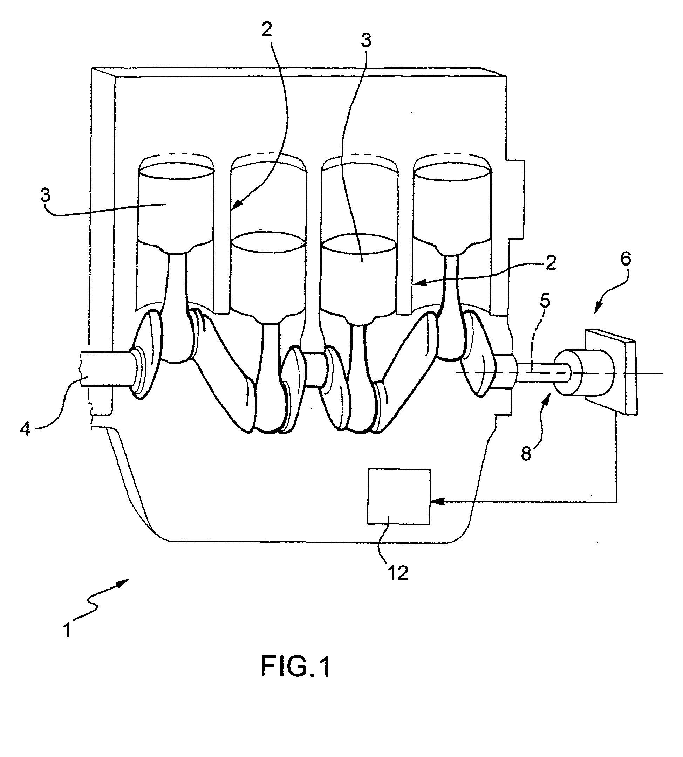

Figure 1 partially shows an internal combustion engine, which is indicated by numeral 1 as a whole. The internal combustion engine 1 includes four cylinders 2, each of which slidingly accommodates a corresponding piston 3, which is mechanically connected to a drive shaft 4 by means of a rod-crank coupling; the drive shaft 4 is pivotally mounted about a longitudinal revolution axis 5 and, from the pistons 3, receives the force generated by the combustion inside the cylinders 2.

The internal combustion engine 1 further includes a position sensor 6 which reads the absolute angular position about the longitudinal axis 5 of the drive shaft 4 and determines the angular revolution speed of the drive shaft 4 and a series of other parameters, including the instantaneous acceleration and the direction of revolution.

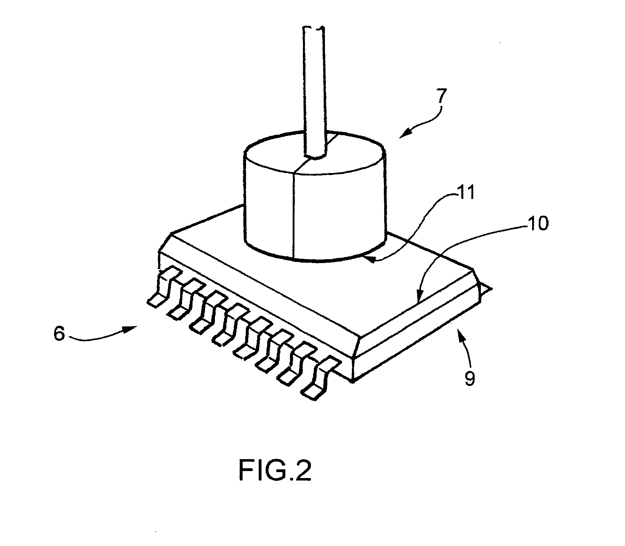

The position sensor 6 is of the contactless type and, as shown in greater detail in figure 2, consists of a magnetic dipole 7 fixed to a revolving free end 8 of the drive shaft 4, and a fixed reader 9 which is adapted to read the orientation of the magnetic dipole 7. The reader 9 is firmly connected to a supporting bracket (not shown), so as to arrange a front surface 10 of the reader 9 facing a surface 11 of the magnetic dipole 7. The bracket (not shown) is constructed so as to arrange the surface 10 at a predetermined distance from the magnetic dipole 7 and in a position axially and radially fixed with respect to the magnetic dipole 7. Importantly, the position taken by the reader 9 with respect to the magnetic dipole 7 must be secure to prevent a drift of the position sensor 6 due to the variation over time of the relative position between the reader 9 and the magnetic dipole 7; specifically, it is particularly important to prevent a rotation between the reader 9 and the magnetic dipole 7 from occurring, while a limited variation of the reciprocal distance between the reader 9 and the magnetic dipole 7 may be tolerated.

With this regard, according to a further embodiment (not shown in the accompanying figures), the position sensor 6 may be placed inside a housing box (not shown) for protecting and isolating the position sensor 6 itself.

The internal combustion engine 1 further includes a control unit 12, which is connected to the position sensor 6 and is intended to process a digital electric signal output by the reader 9 which allows to determine at any time the absolute angular position of drive shaft 4, even upon starting the internal combustion engine 1.

The reader 9 is an encoder which is the fixed part of the position sensor 6 and which contains therein the electronic components which are adapted to convert the angular position of the magnetic dipole 7 into electric output signals. The electric output signals transmit information related to the angular position and to the angular displacement of the magnetic dipole 7 with respect to the reader 9 itself. In this case, the reader 9 is able to supply indications about the angular position of the magnetic dipole 7 with a programmable bit resolution according to the calculating capacity of the control unit 12 and of the reader 9 for each complete revolution of the magnetic dipole 7.

In the reader 9, the electric output signals encode the exact instantaneous angular position of the magnetic dipole 7 with respect to the reader 9 itself, so that, at any time, an adequate decoding circuit inside the control unit 12 may identify the angular position of the magnetic dipole 7 itself. The data related to the displacement of the magnetic dipole 7 over time, and therefore the information related to the speed and the acceleration of the drive shaft 4, at the end of which the magnetic dipole 7 is fixed, are obtained by deriving the value of the angular position of the magnetic dipole 7 over the time.

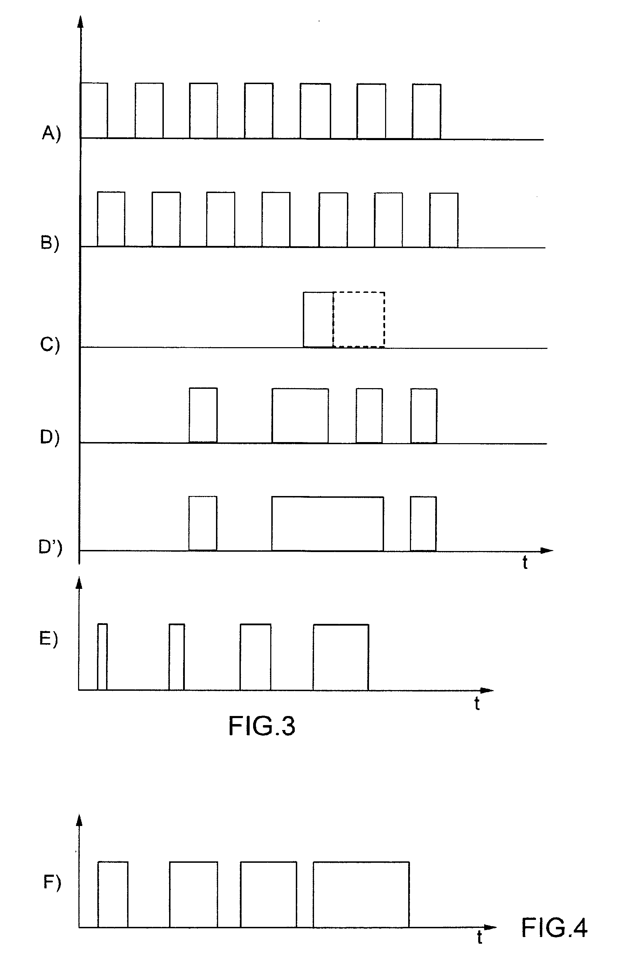

As shown in figure 3, the reader 9 of the position sensor 6 outputs two digital electric signals consisting of two square waves A and B which are reciprocally offset by 90°, and a digital electric singularity signal C named "index". The control unit 12 is intended for processing the electric output signals of the position sensor 6 so as to select only either of the two output square waves A and B and to apply the "OR" logical operation between the selected wave A or B and the singularity signal C. The result is essentially a digital electric signal consisting of a square wave D, D' having a singularity which is generated by the "OR" logical operation between the selected square wave A or B and the singularity signal C and allows to determine the angular position of the drive shaft 4 by recognizing the singularity present in the digital signal D, D' itself. It is worth noting that the waves A and B, the singularity signal C and thus the square wave D, D' are always generated, but are only meaningful when the magnetic dipole 7 is moving because, when the magnetic dipole 7 is still, all these digital electric signals constantly have the same value and therefore do not supply any useful indication.

Furthermore, it is worth noting that the square wave D, D' has a singularity output by the reader 9 of the position sensor 6 to the control unit 12 and which is completely similar to the square wave supplied by a traditional position sensor provided with a phonic wheel; therefore, the processing of the square wave D, D' output by the reader 9 of the position sensor 6 may be carried out by a control unit 12 of standard type without any change (except for those linked to the increase of measurement resolution).

Furthermore, the reader 9 of the position sensor 6 generates a further digital electric signal consisting of a wave E having a width proportional to the absolute angular position of the magnetic dipole 7 with respect to the reader 9 by means of Pulse Width Modulation, more commonly referred to as PWM. In other words, the absolute angular position of the magnetic dipole 7 with respect to the reader 9 (in the range between 0 and 360°) is digitally encoded in the form of time duration of height or start-up ("tₒₙ") of each pulse of the wave E generated by the reader 9. The time duration of each pulse may be expressed in relation to the period between two subsequent pulses by means of the duty cycle concept; in the wave E, the duty cycle is the ratio between the time duration of height or start-up ("tₒₙ") and the total period of the wave and is adapted to indicate for which fraction of the signal period the signal itself is high or on. If the duty cycle is equal to 10%, it means that the pulse has a zero duration of time and the absolute angular position of the magnetic dipole 7 with respect to the reader 9 is 0°, while if the duty cycle is equal to 90%, the absolute angular position of the magnetic dipole 7 with respect to the reader 9 is equal to 360°. The PWM signal values in the range between 0% and 10% and between 90% and 100% are commonly used for electric diagnosis of correct operation.

It is worth noting that the wave E containing the information about the absolute angular position of the magnetic dipole 7 with respect to the reader 9 is generated also when the magnetic dipole 7 is still.

The wave E is also supplied by the reader 9 of the position sensor 6 to the control unit 12 which uses the wave E to determine the absolute angular position of the magnetic dipole 7 with respect to the reader 9. On the other hand, when the magnetic dipole 7 is moving, the control unit 12 no longer uses the wave E, but uses the wave D, D' to determine the absolute angular position of the magnetic dipole 7. The wave D, D' is synchronous with the position of the magnetic dipole 7, i.e. the transitions of the leading/trailing edges of the wave D, D' are synchronous with the positions of the magnetic dipole 7. The wave E is instead not synchronous with the position of the magnetic dipole 7 because the constant frequency is generated. The combined processing of the two waves E and D, D' is used by the control unit 12 to determine the position of the engine and to speed up the operations of detecting the absolute position, because in virtue of the wave E it is no longer necessary to analyze the wave D, D' until the singularity is detected to know the absolute position of the engine.

According to an alternative shown in figure 4, the reader 9, instead of generating the waves D, D' and E as digital electric output signals (shown in figure 3), generates a single wave F as digital electric output signal (shown in figure 4) in which all trailing edges (or, alternatively all leading edges) indicate the instants in which a same increase of the angular position of the magnetic dipole 7 occurs with respect to the reader 9 (i.e. they simulate the passage of the teeth of a traditional phonic wheel); e.g. between two consecutive trailing edges (or, alternatively between two consecutive leading edges) of the wave F the angular position of the magnetic dipole 7 with respect to the reader 9 is increased by a constant, predetermined amount (e.g. 4° or 6°). Furthermore, the width of the wave F is proportional to the absolute angular position of the magnetic dipole 7 with respect to the reader 9 by means of a modulation for the width of a pulse; in other words, as described above, the absolute angular position of the magnetic dipole 7 with respect to the reader 9 (in the range between 0° and 360°) is digitally encoded in the form of time duration of height or start-up ("tₒₙ") of each pulse of the wave F generated by the reader 9.

Similarly as illustrated above, the control unit 12 uses the information modulated in the width of the pulse of the wave F and the sequences of trailing or leading edges to determine the absolute angular position of the magnetic dipole 7 with respect to the reader 9 when the magnetic dipole 7 is moving.

The above-described modes for determining the angular position of the drive shaft 4 have many advantages because they are simple and cost-effective to be implemented, having very compact dimensions and do not require any particular modifications to the existing engine control units. Furthermore, the above-described modes for determining the angular position of the drive shaft 4 allow to reach very high resolutions (i.e. accuracies), theoretically down to fractions of degree, although such accuracies are not required because their use would exceed the calculation power limits of the current control units. Finally, the above-described modes for determining the angular position of the drive shaft 4 allow to accurately know the angular position of the drive shaft 4 even when the drive shaft 4 is still or as soon as the engine starts moving, thus the engine control upon starting the internal combustion engine 1 is much easier and more accurate.

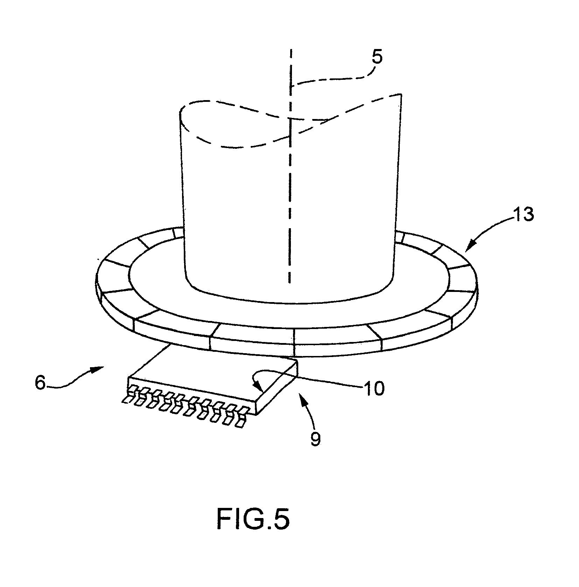

According to a further embodiment shown in figure 5, the magnetic dipole 7 of the position sensor 6 is replaced by a wheel 13 fixed at the revolving free end 8 of the drive shaft 4 and is provided with a plurality of "teeth" consisting of corresponding magnetic dipoles fixed along the periphery of the wheel 13; such a wheel 13 is named "magnetic phonic wheel" and is completely similar to a traditional phonic wheel; in this embodiment, the reader 9 remains completely similar to the above-described reader 9 and is arranged facing the periphery of the magnetic phonic wheel 13.

The reader 9 detects, in use, the variation of the magnetic field generated by the alternating of the magnetic dipoles arranged on the periphery of the magnetic phonic wheel 13. The magnetic dipoles which pass in front of a magnetic field generator cause a variation of the gap existing between the magnetic phonic wheel 13 and the reader 9. A square wave is thus induced in the reader 9 with an essentially high resolution which allows to obtain rather accurate information about the parameters of the drive shaft 4, such as for example speed, acceleration, etc.

In this case, however, the magnetic phonic wheel 13 is required to be provided with a mechanical singularity, which represents the reference point of the magnetic phonic wheel 13 itself. The singularity is made in a manner completely similar as that for a phonic wheel of the traditional type, i.e. by removing two types of magnetic dipoles with which the magnetic phonic wheel 13 is provided. The two missing dipoles identify a range of width of approximately 12° which is a reference point of the drive shaft 4 for the position sensor 6.

Each magnetic dipole of the magnetic phonic wheel 13 which follows the singularity transmits the increase of the angular position of the drive shaft 4 to the reader 9 until a 360° revolution and a new passage of the singularity are completed, both detected by the reader 9.

During the step of starting the internal combustion engine 1, the position sensor 6 is not able to recognize the absolute position of the drive shaft 4 until the first passage of the singularity, and furthermore, since the singularity is represented by a void, each revolution of the magnetic phonic wheel 13 corresponds to a 12° width range in which the position sensor 6 is blind, i.e. is able neither to detect any variations of the magnetic field nor to provide any indications about the speed of the drive shaft 4.

It is therefore worth noting that, in this embodiment, the position sensor 6 allows to obtain precise information about the strength of the magnetic field generated by the alternating of magnetic dipoles, although it is able of provide indications only after the first detection of the singularity by the reader 9.

## Claims

1. A control unit of an internal combustion engine (1), which is provided with a pivotally mounted drive shaft (4); the control unit comprises:
a position sensor (6) coupled to the drive shaft (4) for detecting the angular revolution speed of the drive shaft (4) itself; and
a control unit (12), which is connected to the position sensor (6) and processes an output signal from the position sensor (6) itself for determining the angular position and the angular speed of the drive shaft (4);
the control unit **is characterized in that** the position sensor (6) includes:
a magnetic element (7, 13), which is integral with a free end of the drive shaft (4), and
a reader (9), arranged in a fixed position facing the magnetic element (7, 13) for reading the orientation of the magnetic element (7, 13).

2. A control unit according to claim 1, wherein the magnetic element (7) consists of a magnetic dipole (7) provided with a surface (11) facing a front surface (10) of the reader (9) at a given distance from the reader (9) itself.

3. A control unit according to claim 1, wherein the magnetic element (13) consists of a wheel (13), which is provided with a plurality of magnetic dipoles distributed along the periphery of the wheel (13) itself and faces a front surface (10) of the reader (9) at a predetermined distance from the reader (9) itself.

4. A control unit according to claim 3, wherein the wheel (12) is provided with a mechanical singularity made by removing at least one magnetic dipole arranged on the periphery of the wheel itself.

5. A control unit according to anyone of the claims from 1 to 4, wherein the magnetic element (7, 13) and the reader (9) are arranged inside a housing box, which is adapted to protect and isolate the magnetic element (7) and the reader (9).

6. A control method of an internal combustion engine (1), which is provided with a pivotally mounted drive shaft (4); the control method includes the steps of:
coupling a magnetic element (7) to a free end of the drive shaft (4);
reading, by means of a reader (9) arranged in a fixed position facing the magnetic element (7), the orientation of the magnetic element (7) itself; and
determining the angular position and the angular speed of the drive shaft (4) by means of a control unit (12), which is connected to the reader (9) and processes an output signal from the reader (9) itself.

7. A control method according to claim 6, and including the further steps of:
outputting at least one first digital electric signal (A; B) from the sensor (9), which signal consists of a square wave, the leading and/or trailing edges of which indicate constant, predetermined increases in the angular position of the magnetic element (7); and
outputting a second digital electric signal (C) of singularity from the reader (9), which signal consists of a square wave having a leading edge at a predetermined angular position of the magnetic element (7) and the trailing edge which may be programmed according to a predetermined angular width.

8. A control method according to claim 7, and including a further step of generating a third digital electric output signal (D, D') consisting of a square wave generated by an "OR" logical operation between the first digital electric signal (A; B) and the second digital electric signal (C) of singularity.

9. A method according to claim 8, and including the further step of outputting two first digital electric signals (A, B) from the reader (9), which signals consist of two square waves reciprocally offset by 90°.

10. A method according to claim 8 or 9, and including the further step of generating a fourth digital electric signal (E) consisting of a square wave having a proportional width to the absolute angular position of the magnetic element (7) with respect to the sensor (9).

11. A method according to claim 10, and including the further steps of:
determining the absolute angular position of the magnetic element (7) by means of the combined analysis of the third digital electric output signal (D, D') and of the fourth digital electric signal (E).

12. A control method according to claim 7, and including the further step of generating a fifth digital electric output signal (F) consisting of a square wave, wherein each leading or trailing edge of the square wave represents a given increase of the angular position of the magnetic element (7) with respect to the reader (9); the signal (F) further having a proportional width to the absolute angular position of the magnetic element (7) with respect to the reader (9) by means of a pulse width modulation, so that the absolute angular position of the magnetic element (7) with respect to the reader (9) is digitally encoded in the form of time duration of height or start-up ("tₒₙ") of each pulse of the fifth digital electric output signal (F) generated by the reader (9).

13. A control method according to claim 12, wherein the increase of the angular position of the magnetic element (7) with respect to the reader (9) is constant and depends on the resolution of the reader (9); each angular position being detected by the trailing or leading edges of the fifth digital electric output signal (F) to prevent the resolution from being lost close to the singularity.
